# EUROPÄISCHE PATENTANMELDUNG

(11) **EP 1 886 547 A2**
(43) Veröffentlichungstag der Anmeldung: **13.02.2008**
(21) Anmeldenummer: 07113738.4
(22) Anmeldetag: 02.08.2007
(51) Int. Cl.: A01B 63/10, A01B 59/06

(54) **Verbindung eines Hubarms an einer Hubwelle eines Dreipunkt-Geräteanbaus**

(30) Priorität: 10.08.2006 DE 102006037527
(71) Anmelder: Deere & Company, Moline, IL 61265-8098 (US)
(72) Erfinder: Heitlinger, Martin, 76684, Östringen (DE)
(74) Vertreter: Bradl, Joachim

(57) **Zusammenfassung**

Die Erfindung betrifft eine Verbindung eines Hubarms (32, 36) an einer Hubwelle (36) eines Dreipunkt-Geräteanbaus (10) für ein landwirtschaftliches oder industrielles Nutzfahrzeug. Der Hubarm (32, 34) weist einen Montagebereich (46, 48) mit einer Wellenaufnahme (50) zur Montage an der Hubwelle (36) auf. Die Hubwelle (36) weist einen Montagebereich (42, 44) für den Hubarm (32, 34) auf. Die Wellenaufnahme (50) des Hubarms (32, 34) umgreift im montierten Zustand die Hubwelle (36) an dem Montagebereich (42, 44) der Hubwelle (36). Der Montagebereich (42, 44) der Hubwelle (36) und der Montagebereich (46, 48) des Hubarms (32, 34) sind im Wesentlichen komplementär zueinander ausgebildet. Des Weiteren betrifft die vorliegende Erfindung ein Hubwelle (36) und einen Hubarm (32, 34). Bei vergleichbaren Eigenschaften zu einer herkömmlichen Verbindung eines Hubarms an einer Hubwelle soll diese einen verringerten Verschleiß aufweisen. Die erfindungsgemäße Verbindung ist dadurch gekennzeichnet, dass der Montagebereich (46, 48) des Hubarms (32, 34) und der Montagebereich (42, 44) der Hubwelle (36) jeweils einen polygonförmigen Querschnitt aufweisen. Der Hubarm (32, 34) weist in einem an der Hubwelle (36) montierten Zustand mit der Hubwelle (36) eine Polygonverbindung auf.

## Beschreibung

Die Erfindung betrifft eine Verbindung eines Hubarms an einer Hubwelle eines Dreipunkt-Geräteanbaus für ein landwirtschaftliches oder industrielles Nutzfahrzeug. Der Hubarm weist einen Montagebereich mit einer Wellenaufnahme zur Montage an der Hubwelle auf. Die Hubwelle weist einen Montagebereich für den Hubarm auf. Die Wellenaufnahme des Hubarms umgreift im montierten Zustand die Hubwelle an dem Montagebereich der Hubwelle. Hierbei könnte die Wellenaufnahme des Hubarms im montierten Zustand die Hubwelle an dem Montagebereich der Hubwelle vollständig oder nahezu vollständig umgreifen. Der Montagebereich der Hubwelle und der Montagebereich des Hubarms sind im Wesentlichen komplementär zueinander ausgebildet. Insoweit stellt die Verbindung zwischen dem Hubarm und der Hubwelle eine drehfeste Verbindung dar. Des Weiteren betrifft die vorliegende Erfindung eine Hubwelle und einen Hubarm.

Dreipunkt-Geräteanbauten dienen bei landwirtschaftlichen oder industriellen Nutzfahrzeugen zum Anbauen bzw. Ankoppeln von Arbeitsgeräten an das Nutzfahrzeug. So werden bei landwirtschaftlichen Nutzfahrzeugen, insbesondere bei Traktoren, Pflügen, Sämaschinen, Grubber und ähnliche Anbaugeräte mittels des Dreipunkt-Geräteanbaus an den Traktor gekoppelt. Bei industriellen Nutzfahrzeugen werden mittels des Dreipunkt-Geräteanbaus z.B. Mähwerke oder Schneeräumschilder an das Nutzfahrzeug gekoppelt.

Dreipunkt-Geräteanbauten sind beispielsweise in der DIN-Norm ISO 730-1 beschrieben. So weist ein Dreipunkt-Geräteanbau einen Oberlenker und zwei Unterlenker auf. Der Oberlenker ist mit seinem einen Ende in einem mittigen oberen Bereich am Nutzfahrzeug dreh-/schwenkbar angebracht. Die beiden Unterlenker sind jeweils mit ihrem einen Ende unterhalb des Oberlenkers und links und rechts seitlich versetzt dazu am Nutzfahrzeug dreh-/schwenkbar angebracht. Damit das Anbaugerät in vertikaler Richtung relativ zum Nutzfahrzeug bewegbar ist (Absenken oder Anheben), weist ein Dreipunkt-Geräteanbau üblicherweise einen Hubmechanismus auf, welcher an den Unterlenkern angreift. Lediglich beispielhaft wird auf Figur 1 der DE 103 24 922 A1 verwiesen, die einen solchen Hubmechanismus aufweist. Der Hubmechanismus umfasst zumeist zwei seitlich angeordnete Hubzylinder, welche mit ihrem einen Ende an dem Nutzfahrzeug beweglich angelenkt sind. Weiterhin umfasst der Hubmechanismus eine Hubwelle und zwei Hubarme. Die Hubwelle ist verdrehbar in einem Lager gelagert, welches ortsfest am Nutzfahrzeug angeordnet ist. Das eine Ende eines Hubarms ist drehfest mit der Hubwelle verbunden. Der Hubarm weist eine Anlenkstelle auf, welche beweglich mit dem anderen Ende eines Hubzylinders verbindbar ist. Das andere Ende des Hubarms ist beweglich mit einem ersten Ende einer Hubstrebe verbunden. Das andere Ende der Hubstrebe ist beweglich mit einem Unterlenker verbunden. Falls die Hubzylinder ausgefahren werden, wird jeweils auf einen Hubarm eine Kraft ausgeübt, so dass die Hubarme zusammen mit der Hubwelle derart verdreht werden, dass das der Hubwelle abgewandte Ende der Hubarme nach oben geschwenkt wird. Hierdurch werden mit Hilfe der Hubstreben die Unterlenker ebenfalls nach oben geschwenkt. Wenn die Hubzylinder eingefahren werden, werden die Hubarme zusammen mit der Hubwelle derart verdreht, dass das der Hubwelle abgewandte Ende der Hubarme nach unten geschwenkt wird und somit die Unterlenker nach unten geschwenkt bzw. abgesenkt werden. Falls asymmetrisch ausgebildete Arbeitsgeräte (z.B. ein Mähwerk) an einem Dreipunkt-Geräteanbau angekoppelt sind, wirkt auf den einen Unterlenker und über die diesem Unterlenker zugeordnete Hubstrebe auf dessen Hubarm eine nach unten gerichtete Kraft. Auf den anderen Unterlenker und über dessen Hubstrebe auf den anderen Hubarm wirkt hingegen eine nach oben gerichtete Kraft. Hierdurch wirkt auf die Hubwelle ein Drehmoment.

Es ist üblicherweise ein Betriebsmodus des Dreipunkt-Geräteanbaus vorgesehen, bei welchem die Hubzylinder in einer starren Position verbleiben, so dass hierdurch die Unterlenker ebenfalls im Wesentlichen in einer unveränderten Position verbleiben. In diesem Betriebsmodus wirken auf den Dreipunkt-Geräteanbau ganz erhebliche Kräfte, so dass die Bauteile des Dreipunkt-Geräteanbaus einem hohen Verschleiß unterliegen. Dementsprechend sind einzelne Bauteile eines Dreipunkt-Geräteanbaus aus gehärtetem Stahl ausgebildet. Dies trifft insbesondere für die Montagebereiche der Hubwelle und der Hubarme zu. Üblicherweise sind die Montagebereiche der Hubwelle und der Hubarme durch eine Verzahnung, insbesondere durch eine Keilwellen-Verbindung, realisiert.

Gerade auf Grund der erheblichen, vor allem stoßartig auftretenden Kräfte, mit welchen der Dreipunkt-Geräteanbau in einem solchen Betriebsmodus beaufschlagt wird, treten auch an der Verzahnung der Hubwelle bzw. der Hubarme bisweilen starke Verschleißerscheinungen auf, so dass unter Umständen nach längerer Zeit die Hubwelle und/oder die Hubarme auszutauschen sind. Grund für die Verschleißerscheinungen sind insbesondere ein - gegebenenfalls im Laufe der Zeit sich ergebendes - Spiel zwischen Hubarm und Hubwelle. Ein solches Spiel vergrößert sich im Zuge des weiteren Betriebs zunehmend.

Der vorliegenden Erfindung liegt daher die Aufgabe zugrunde, eine Verbindung eines Hubarms an einer Hubwelle sowie ein Hubarm und ein Hubwelle der eingangs genannten Art anzugeben und weiterzubilden, durch welche die vorgenannten Probleme überwunden werden. Insbesondere soll die Verbindung im Wesentlichen vergleichbare Eigenschaften zur herkömmlichen Verbindung jedoch mit einem verringerten Verschleiß aufweisen.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist eine Verbindung der eingangs genannten Art dadurch gekennzeichnet, dass der Montagebereich des Hubarms und der Montagebereich der Hubwelle jeweils einen polygonförmigen Querschnitt aufweisen. Der Hubarm weist in einem an der Hubwelle montierten Zustand mit der Hubwelle daher eine Polygonverbindung auf.

Erfindungsgemäß ist zunächst erkannt worden, dass eine Keilwellen-Verbindung zum Übertragen von stoßartigen Drehmomenten durchaus geeignet ist und daher auch für eine Verbindung zwischen Hubwelle und Hubarm genutzt wird. Allerdings können Verschleißerscheinungen auftreten, welche insbesondere von Kerbwirkungen der einzelnen Zähne der Keilwellen-Verbindung verursacht werden könnten. Auch die asymmetrische Belastung der Unterlenker bzw. der Hubarme bei angekoppelten, asymmetrisch ausgebildeten Arbeitsgeräten kann sich nachteilig auf die herkömmlichen Montagebereiche zwischen Hubarm und Hubwelle auswirken. Daher wird in erfindungsgemäßer Weise vorgeschlagenen, als Verbindung zwischen Hubarm und Hubwelle eine Polygonverbindung vorzusehen, welche sich insbesondere dadurch auszeichnet, dass diese hinsichtlich der Kerbwirkung vielfach günstiger als andere Formschluss-Verbindungen ist. Eine solche Polygonverbindung ist darüber hinaus selbstzentrierend, wodurch bei einer Verdrehung ein eventuell vorhandenes Spiel symmetrisch ausgeglichen wird. Weiterhin ist die Herstellung der Komponenten für eine Polygonverbindung einfacher, preiswerter und genauer, als dies bei Keil- und Zahnwellen-Verbindungen der Fall ist. Die Herstellung erfordert eine entsprechende Spezialmaschine. Insbesondere zum Übertragen stoßartiger Drehmomente ist eine Polygonverbindung geeignet. Dementsprechend weist die erfindungsgemäße Verbindung zwischen Hubwelle und Hubarm einen Formschluss auf.

Nun könnte grundsätzlich als polygonförmiger Querschnitt ein beliebiges Vieleck vorgesehen sein, zwischen welchem sich im Wesentlichen planar ausgebildete Verbindungsbereiche erstrecken. Bevorzugt für den vorliegenden Anwendungsbereich vorgesehen wird jedoch eine Polygonverbindung mit einer Querschnittsform, welche im Wesentlichen einem gleichseitigen Dreieck mit abgerundeten Seiten und/oder Ecke entspricht. Im Konkreten könnte die Querschnittsform die eines Gleichdicks sein.

In einer ganz besonders bevorzugten Ausführungsform weist die Polygonverbindung eine Querschnittsform auf, welche im Wesentlichen einem gleichseitigen Vieleck entspricht, insbesondere einem Quadrat oder einem Hexagon bzw. Sechseck. Die Seiten und/oder die Ecken des Vielecks könnten abgerundet ausgebildet sein. Eine solche Ausbildung betrifft sowohl die Querschnittsfläche des Montagebereichs des Hubarms als auch die Querschnittsfläche des Montagebereichs der Hubwelle. Hierdurch kann in vorteilhafter Weise eine nahezu durchgehende Flächenverbindung zwischen Hubwelle und Hubarm erzielt werden, was eine effiziente Kraftübertragung zwischen den zwei Bauteilen ermöglicht.

Im Konkreten könnten die abgerundeten Ecken des Quadrats oder des Vielecks einen kreis- oder ellipsenförmigen Querschnittbereich aufweisen.

Grundsätzlich ist bevorzugt die Polygonverbindung zwischen Hubwelle und Hubarm derart ausgebildet, dass zwischen den Montagebereichen der Hubwelle und des Hubarms ein Flächenkontakt vorliegt. Ein solcher Flächenkontakt wird bevorzugt über den gesamten Umfang der Wellenaufnahme des Hubarms angestrebt. Dementsprechend werden die Querschnitte der Montagebereiche der Hubwelle und des Hubarms - auch hinsichtlich der Toleranzen - entsprechend ausgebildet, wie dies auch schon oben angedeutet wurde.

Ganz besonders bevorzugt ist die Querschnittsform des Hubarms derart ausgebildet, dass ein abgerundeter oder planarer Seitenbereich der vieleckigen Querschnittsform im Wesentlichen parallel zur äußeren Oberfläche des Hubarms angeordnet ist. Die diesbezügliche Oberfläche des Hubarms stellt beispielsweise der obere oder untere äußere Bereich des Hubarms an der Wellenaufnahme des Hubarms dar. Mit anderen Worten ist die dem äußeren Bereich des Hubarms zugewandte innere Fläche der Wellenaufnahme im Wesentlichen planar oder leicht abgerundet ausgebildet. Dementsprechend weist dieser äußere Bereich des Hubarms im Querschnitt eine nahezu gleichmäßige Dicke auf, so dass das Material des Hubarms in diesem Bereich gleichmäßig belastet bzw. beansprucht wird. Somit tritt an diesem - eventuell diesbezüglich kritischen - Bereich nahezu keine Materialermüdung bzw. Materialbeanspruchung auf.

In einer bevorzugten Ausführungsform weist die Wellenaufnahme des Hubarms eine schlitzförmige Aussparung auf. Die Aussparung könnte sich in radialer Richtung von dem Inneren der Wellenaufnahme nach außen erstrecken. Alternativ könnte die Aussparung sich in einer Richtung erstreckten, welche zwischen der radialen Richtung und einer Richtung senkrecht hierzu orientiert ist. Die Aussparung könnte nach der formgebenden Herstellung des Hubarms eingebracht werden, beispielsweise durch Sägen. Hierdurch kann der Innendurchmesser der Wellenaufnahme etwas vergrößert werden. Dies ist bei der Montage des Hubarms auf der Hubwelle vorteilhaft, da auf Grund des leicht vergrößerten Innendurchmessers der Wellenaufnahme der Hubarm sich mit ausreichendem Spiel unter geringem Kraftaufwand auf die Hubwelle schieben lässt.

Damit der Hubarm unverlierbar an der Hubwelle befestigt wird, könnte an der schlitzförmigen Aussparung ein Klemmmittel vorgesehen bzw. befestigbar sein, mit welchem der Hubarm an der Hubwelle im montierten Zustand geklemmt werden kann.

Insoweit wird eine Klemmverbindung zwischen Hubwelle und Hubarm hergestellt. Dementsprechend ist zusätzlich zu der durch die Polygonverbindung hergestellte Formschluss-Verbindung zwischen Hubarm und Hubwelle eine durch die Klemmverbindung vorliegende Kraftschluss-Verbindung gebildet.

Das Klemmmittel könnte mindestens eine Schraube bzw. Bolzen und eine Mutter aufweisen. Die Schraube könnte hierbei in zwei Bohrungen einführbar sein, welche miteinander fluchten und im Wesentlichen senkrecht zu dem Verlauf der schlitzförmigen Aussparung angeordnet sind.

Die schlitzförmige Aussparung wird nun bevorzugt derart positioniert und ausgebildet, dass hierdurch bei der Montage der Hubarm unter geringer Kraftaufwendung auf die Hubwelle geschoben werden kann. Im Konkreten ist die Aussparung in einem mittleren Endbereich des Hubarms in einer Ebene vorgesehen, welche parallel zur Längsrichtung des Hubarms und parallel zur Längsachse der Wellenaufnahme des Hubarms ausgerichtet ist.

Ganz besonders bevorzugt weist die Hubwelle zwei Montagebereiche auf. An jedem Montagebereich der Hubwelle ist jeweils ein Hubarm montierbar. Zweckmäßigerweise wird die Hubwelle im Wesentlichen quer zu den Unterlenkern ausgerichtet sein und ein Hubarm wird in vertikaler Richtung über einem Unterlenker an der Hubwelle angeordnet sein. Die zwei Montagebereiche könnten jeweils endseitig an der Hubwelle angeordnet sein. Hierdurch ergibt sich eine Konfiguration, wie sie beispielsweise in der Figur 1 der DE 103 24 922 A1 oder in Figur 1 dieser Anmeldung gezeigt ist.

Es könnte ein Sicherungsmittel vorgesehen sein, mit welchem eine Bewegung des Hubarms in Längsrichtung der Hubwelle in einem an der Hubwelle montierten Zustand zumindest weitgehend verhinderbar ist. Hierzu könnte die Hubwelle an ihrem Endbereich eine Stirnbohrung aufweisen, in welche eine Schraube bzw. ein Bolzen befestigbar ist. Mit der Schraube ist eine Sicherungsscheibe mit einem Außendurchmesser montierbar, welcher größer als der Innendurchmesser der Wellenaufnahme des Hubarms ist. Von der inneren Seite der Hubwelle könnte eine Schulter an der Hubwelle vorgesehen sein, an welcher ein Hubarm zur Anlage kommt.

Nun könnte die Hubwelle in einem an dem Nutzfahrzeug vorgesehenen Lager drehbar gelagert sein. Alternativ oder zusätzlich weist der Hubarm eine Anlenkstelle auf, an welcher eine mit einem Unterlenker des Dreipunkt-Geräteanbaus verbundene Hubstrebe drehbar/schwenkbar befestigbar ist. Weiterhin könnte der Hubarm eine weitere Anlenkstelle aufweisen, an welcher ein Hubzylinder drehbar/schwenkbar befestigbar ist. Mit anderen Worten könnten die erfindungsgemäße Verbindung zwischen Hubwelle und Hubarm an einem herkömmlichen Dreipunkt-Geräteanbau zum Einsatz kommen. Es ist auch denkbar, dass ein Bausatz zur Verfügung gestellt wird, mit welchem ein Nachrüsten von bereits im Feld befindlichen Dreipunkt-Geräteanbauten mit herkömmlichen Keilwellen-Verbindungen dadurch erfolgt, dass der Bausatz zumindest eine Hubwelle und zwei Hubarme mit einer erfindungsgemäßen Polygonverbindung aufweist, wobei diese Bauteile anstelle der herkömmlichen Bauteile ersetzt werden.

Damit das Verschleißrisiko an der erfindungsgemäßen Polygonverbindung zwischen Hubwelle und Hubarm möglichst gering gehalten wird, ist bevorzugt vorgesehen, dass die Hubwelle und/oder der Hubarm jeweils in seinem Montagebereich gehärtet ausgebildet ist.

Hinsichtlich eines Hubarms wird die eingangs genannte Aufgabe durch die Merkmale des Anspruchs 17 gelöst. Demgemäß weist der Hubarm einen Montagebereich mit einer Wellenaufnahme zur Montage an einem Montagebereich einer Hubwelle auf. Die Wellenaufnahme des Hubarms umgreift im montierten Zustand die Hubwelle an dem Montagebereich der Hubwelle. Der Montagebereich des Hubarms ist im Wesentlichen komplementär zum Montagebereich der Hubwelle ausgebildet. Der Montagebereich des Hubarms weist einen polygonförmigen Querschnitt derart auf, dass der Hubarm mit der Hubwelle eine Polygonverbindung bildet, wenn der Hubarm an der Hubwelle montiert ist. Der erfindungsgemäße Hubarm wird an einem Dreipunkt-Geräteanbau eines landwirtschaftlichen oder industriellen Nutzfahrzeugs angebaut. Vorzugsweise ist der erfindungsgemäße Hubarm nach einem der Ansprüche 1 bis 16 ausgebildet und zwar insbesondere hinsichtlich der Merkmale, die in den Ansprüchen 1 bis 16 einschlägig für die Ausbildung des Hubarms sind. Insoweit wird zur Vermeidung von Wiederholungen auf den vorangegangenen Teil der Beschreibung verwiesen.

Hinsichtlich einer Hubwelle wird die eingangs genannte Aufgabe durch die Merkmale des Anspruchs 18 gelöst. Demgemäß weist die Hubwelle einen Montagebereich auf, an welchem ein Hubarm montierbar ist. Der Montagebereich der Hubwelle wird im montierten Zustand von dem Hubarm umgriffen. Der Montagebereich der Hubwelle ist im Wesentlichen komplementär zum Montagebereich des Hubarms ausgebildet. Der Montagebereich der Hubwelle weist einen polygonförmigen Querschnitt derart auf, dass die Hubwelle mit dem Hubarm eine Polygonverbindung bildet, wenn der Hubarm an der Hubwelle montiert ist. Vorzugsweise ist die erfindungsgemäße Hubwelle nach einem der Ansprüche 1 bis 16 ausgebildet und zwar insbesondere hinsichtlich der Merkmale, die in den Ansprüchen 1 bis 16 einschlägig für die Ausbildung der Hubwelle sind. Insoweit wird zur Vermeidung von Wiederholungen auf den vorangegangenen Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: in einer perspektivischen Ansicht einen Dreipunkt-Geräteanbau mit einer Hubwelle und zwei Hubarmen,
- Fig. 2: in einer Seitenansicht ein Ausführungsbeispiel eines erfindungsgemäßen Hubarms,
- Fig. 3: in einer perspektivischen Ansicht das Ausführungsbeispiel des Hubarms gemäß Figur 2,
- Fig. 4: in einer Seitenansicht ein Ausführungsbeispiel einer erfindungsgemäßen Hubwelle und

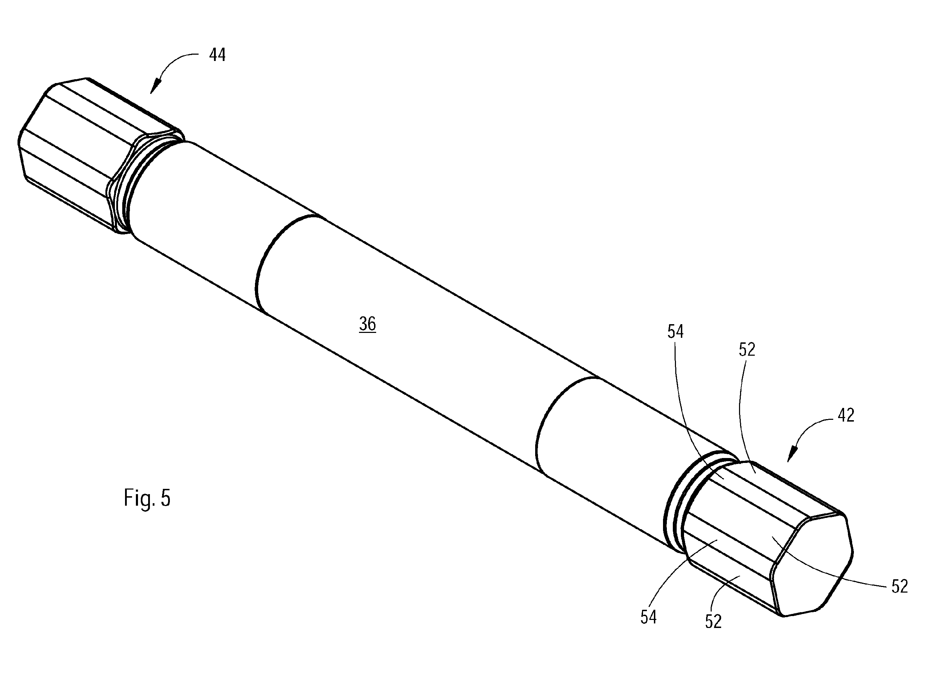

- Fig. 5: in einer perspektivischen Ansicht das Ausführungsbeispiel der Hubwelle gemäß Figur 4.

Gleiche oder ähnliche Bauteile sind in den Figuren mit denselben Bezugszeichen gekennzeichnet.

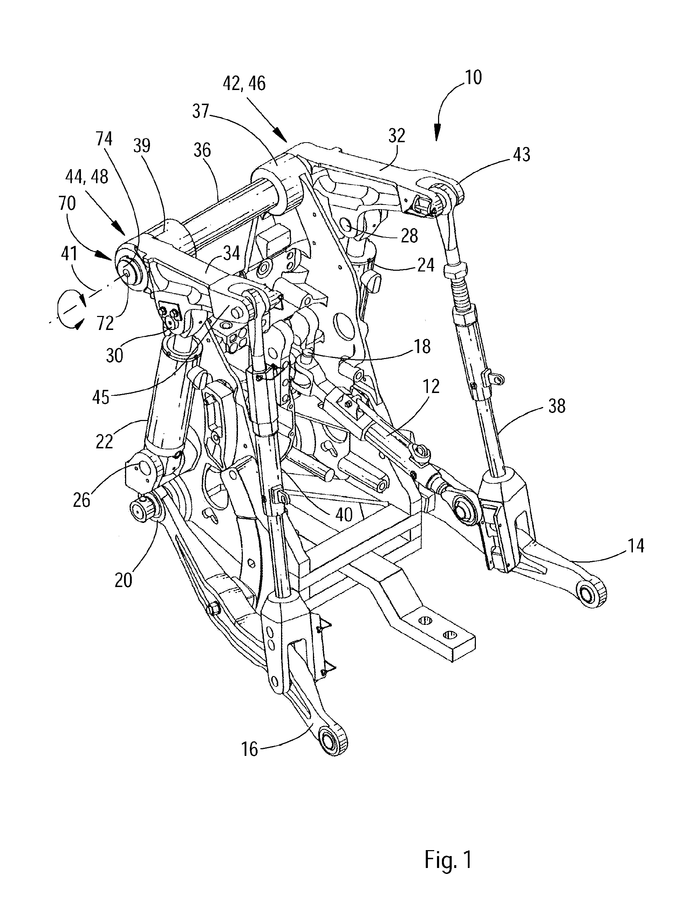

Figur 1 zeigt in einer perspektivischen Ansicht einen Dreipunkt-Geräteanbau 10, wie er beispielsweise im Heckbereich eines Traktors (nicht gezeigt) angebaut ist. Der Dreipunkt-Geräteanbau 10 weist einen Oberlenker 12 und zwei Unterlenker 14, 16 auf. Der Oberlenker 12 ist mit seinem dem Fahrzeug zugewandten Ende an der Anbaustelle 18 beweglich am Fahrzeug angebaut. Die Unterlenker 14, 16 sind mit ihrem dem Fahrzeug zugewandten Ende an der Anbaustelle 20 beweglich an dem Fahrzeug angebaut.

Der Dreipunkt-Geräteanbau 10 umfasst weiterhin zwei Hubzylinder 22, 24. Das eine Ende der Hubzylinder 22, 24 ist jeweils drehbar an der Anbaustelle 26 am Fahrzeug befestigt. Das andere Ende des Hubzylinders 22, 24 ist jeweils an der entsprechenden Anlenkstelle 28, 30 an dem Hubarm 32, 34 beweglich angelenkt. Die Hubarme 32, 34 sind mit ihrem einen Ende jeweils drehfest an der Hubwelle 36 verbunden. Mit ihrem anderen Ende sind die Hubarme 32, 34 jeweils mit dem einen Ende an den Anlenkstellen 43, 45 mit der Hubstreben 38, 40 beweglich verbunden. Das andere Ende der Hubstreben 38, 40 ist jeweils mit den Unterlenkern 14, 16 beweglich verbunden.

Die Hubwelle 36 ist in einem an dem Nutzfahrzeug vorgesehenen Lager 37, 39 um die Achse 41 drehbar gelagert. Die Hubwelle 36 weist zwei Montagebereiche 42, 44 auf, wobei an jedem Montagebereich 42, 44 der Hubwelle 36 jeweils ein Hubarm 32, 34 montiert ist. Die zwei Montagebereiche 42, 44 sind jeweils endseitig an der Hubwelle 36 angeordnet.

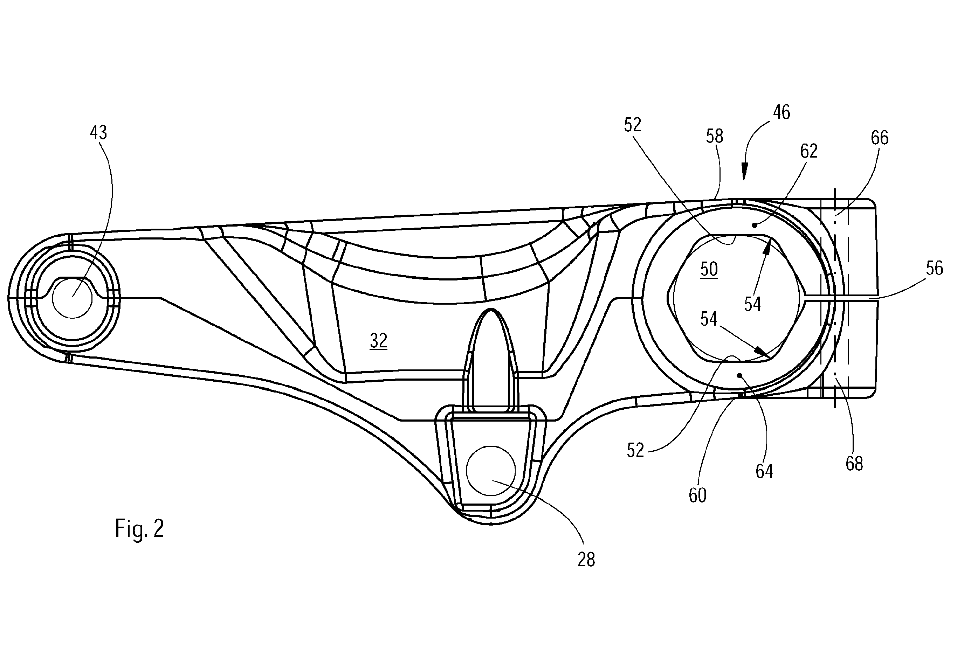

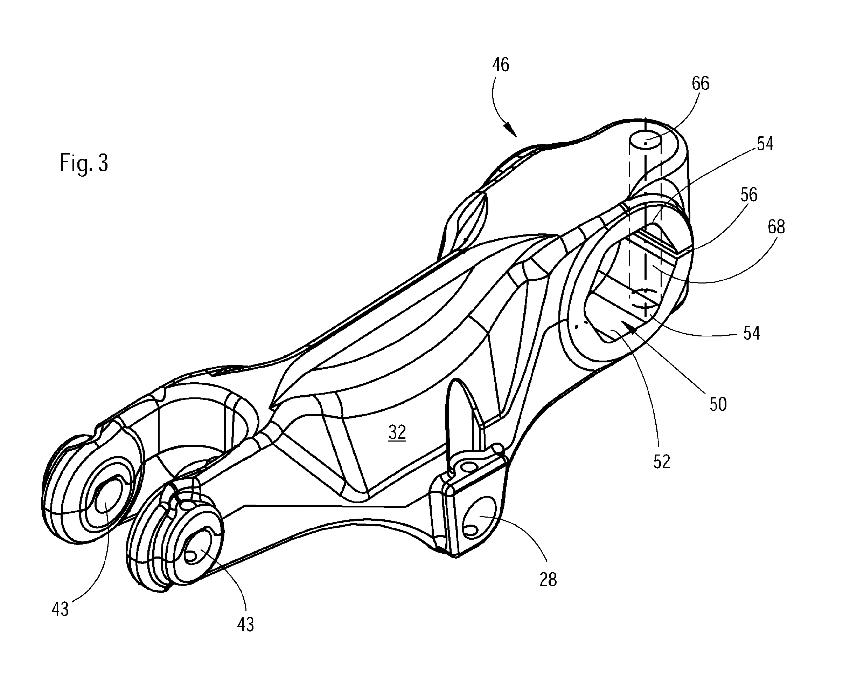

Die Hubarme 32, 34 weisen jeweils einen Montagebereich 46, 48 mit einer Wellenaufnahme 50 zur Montage an der Hubwelle 36 auf. Die Wellenaufnahme 50 des Hubarms 32, 34 umgreift im montierten Zustand die Hubwelle 36 an dem Montagebereich 42, 44 der Hubwelle. Der Montagebereich 42, 44 der Hubwelle 36 und der Montagebereich 46, 48 des Hubarms 32, 34 sind im Wesentlichen komplementär zueinander ausgebildet. Erfindungsgemäß weisen der Montagebereich 46, 48 des Hubarms 32, 34 und der Montagebereich 42, 44 der Hubwelle 36 jeweils einen polygonförmigen Querschnitt auf, was den Figuren 2 bis 4 entnehmbar ist. Der Hubarm 32, 34 bildet in einem an der Hubwelle 36 montierten Zustand mit der Hubwelle 36 eine Polygonverbindung.

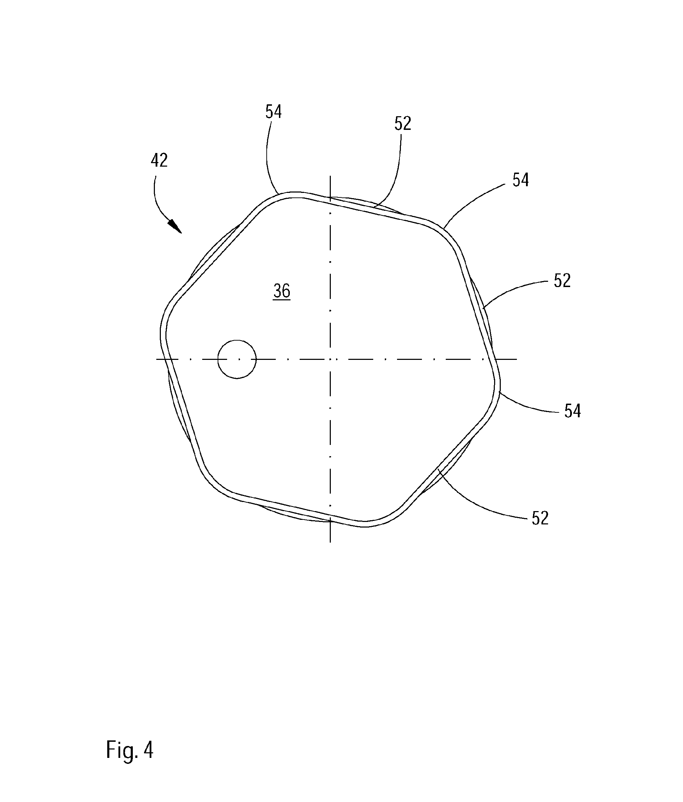

Figur 2 zeigt in einer Seitenansicht einen erfindungsgemäßen Hubarm 32, der an seinem Montagebereich 46 die Wellenaufnahme 50 aufweist. Die Wellenaufnahme 50 ist in Form eines gleichseitigen Hexagons ausgebildet, welches im Wesentlichen geradlinige Bereiche 52 und abgerundete Ecken 54 aufweist. Die abgerundeten Ecken 54 des Hexagons weisen einen im Wesentlichen kreisförmigen Querschnittbereich auf. Figur 4 zeigt eine Querschnittsansicht des Montagebereichs 42 der Hubwelle 36. Auch der Montagebereich 42 der Hubwelle 36 ist in Form eines gleichseitigen Hexagons mit geradlinigen Bereichen 52 und abgerundeten Ecken 54 polygonförmig ausgebildet. Dementsprechend ist der in Figur 2 gezeigte Montagebereich 46 der Wellenaufnahme 50 des Hubarms 32 komplementär zum in Figur 4 gezeigten Montagebereich 42 der Hubwelle 36 ausgebildet.

Die Polygonverbindung zwischen Hubwelle 36 und Hubarm 32, 34 ist derart ausgebildet, dass zwischen den Montagebereichen 42, 44 der Hubwelle 36 und den Montagebereichen 46, 48 des Hubarms 32, 34 ein Flächenkontakt vorliegt. Dieser Flächenkontakt erstreckt sich im Wesentlichen über den gesamten Umfang der Wellenaufnahme 50 des Hubarms 32, 34, mit Ausnahme der Aussparung 56.

Die Querschnittsform des Hubarms 32, 34 ist derart ausgebildet ist, dass die zwei in Figur 2 mit dem Bezugszeichen 52 gekennzeichneten geradlinigen Bereiche 52 parallel zu der äußeren Oberfläche 58, 60 des Hubarms 32, 34 orientiert sind. Dementsprechend ergibt sich in den beiden Bereichen 62, 64 eine im Wesentlichen gleichmäßige Materialdicke, welche eine Materialermüdung in diesem Bereich weitgehend verhindert. Der eine Bereich 62 ist hierbei zwischen der oberen äußeren Oberfläche 58 und dem dazu benachbart angeordneten geradlinigen Bereich 52 angeordnet. Der andere Bereich 64 ist zwischen der unteren äußeren Oberfläche 60 und dem dazu benachbart angeordneten geradlinigen Bereich 52 angeordnet.

Die Wellenaufnahme 50 bzw. der Hubarm 32, 34 weist eine schlitzförmige Aussparung 56 auf, welche sich in radialer Richtung von dem Inneren der Wellenaufnahme 50 nach außen erstreckt. Die Aussparung 56 wird nachdem der Hubarm 32 gegossen wurde und die polygonförmige Wellenaufnahme 50 ausgebildet wurde eingebracht. Hierdurch weitet sich im endseitigen Bereich des Hubarms 32 die Wellenaufnahme 50 etwas auf, wodurch das Aufschieben des Hubarms 32 auf die Hubwelle 36 erleichtert wird. An der schlitzförmigen Aussparung 56 ist ein in den Fig. nicht gezeigtes und in Form von einer Schraube mit einer Mutter ausgebildetes Klemmmittel befestigbar, mit welchem der Hubarm 32, 34 an der Hubwelle 36 im montierten Zustand geklemmt werden kann. Das Klemmmittel weist zwei fluchtend zueinander angeordnete Bohrungen 66, 68 auf, welche senkrecht zu der Aussparung 56 orientiert verlaufen und in welche eine Schraube (nicht gezeigt) einführbar ist.

Figur 1 ist entnehmbar, dass ein Sicherungsmittel 70 vorgesehen ist, mit welchem eine Bewegung des Hubarms 32, 34 in Längsrichtung der Hubwelle 36 in einem an der Hubwelle 36 montierten Zustand zumindest weitgehend verhinderbar ist. Im Konkreten weist die Hubwelle 36 an ihrem Endbereich eine Stirnbohrung 72 auf, in welche eine Schraube (nicht gezeigt) einschraubbar ist. Mit der Schraube ist eine Sicherungsscheibe 74 mit einem Außendurchmesser montierbar ist, welcher größer als der Innendurchmesser der Wellenaufnahme 50 des Hubarms 32, 34 ist. Dementsprechend kann sich der in Figur 1 gezeigte Hubarm 34 erst nach links von der Hubwelle 36 lösen, wenn die Sicherungsscheibe 74 entfernt ist. In der entgegengesetzten Richtung kommt der Hubarm 34 an dem Lager 39 der Hubwelle 36 zur Anlage, so dass der Hubarm auch nicht nach rechts in Längsachse der Hubwelle 36 bewegt werden kann.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Verbindung eines Hubarms (32, 34) an einer Hubwelle (36) eines Dreipunkt-Geräteanbaus (10) für ein landwirtschaftliches oder industrielles Nutzfahrzeug, wobei der Hubarm (32, 34) einen Montagebereich (46, 48) mit einer Wellenaufnahme (50) zur Montage an der Hubwelle (36) aufweist, wobei die Hubwelle (36) einen Montagebereich (42, 44) für den Hubarm (32, 34) aufweist, wobei die Wellenaufnahme (50) des Hubarms (32, 34) im montierten Zustand die Hubwelle (36) an dem Montagebereich (42, 44) der Hubwelle (36) umgreift, wobei der Montagebereich (42, 44) der Hubwelle (36) und der Montagebereich (46, 48) des Hubarms (32, 34) im Wesentlichen komplementär zueinander ausgebildet sind, **dadurch gekennzeichnet, dass** der Montagebereich (46, 48) des Hubarms (32, 34) und der Montagebereich (42, 44) der Hubwelle (36) jeweils einen polygonförmigen Querschnitt aufweisen und dass der Hubarm (32, 34) in einem an der Hubwelle (36) montierten Zustand mit der Hubwelle (36) eine Polygonverbindung aufweisen.

2. Verbindung nach Anspruch 1, **dadurch gekennzeichnet, dass** die Polygonverbindung eine Querschnittsform aufweist, welche im Wesentlichen einem gleichseitigen Dreieck mit abgerundeten Seiten und/oder Ecke entspricht, insbesondere in Form eines Gleichdicks.

3. Verbindung nach Anspruch 1, **dadurch gekennzeichnet, dass** die Polygonverbindung eine Querschnittsform aufweist, welche im Wesentlichen einem gleichseitigen Vieleck entspricht, insbesondere einem Quadrat oder einem Hexagon.

4. Verbindung nach Anspruch 3, **dadurch gekennzeichnet, dass** die Seiten (52) und/oder Ecken (54) des Vielecks abgerundet ausgebildet sind.

5. Verbindung nach Anspruch 2 oder 4, **dadurch gekennzeichnet, dass** die abgerundeten Ecken (54) des Quadrats oder des Vielecks einen kreis- oder ellipsenförmigen Querschnittbereich aufweisen.

6. Verbindung nach einem der Ansprüche 1 bis 5, **dadurch gekennzeichnet, dass** die Polygonverbindung zwischen Hubwelle (36) und Hubarm (32, 34) derart ausgebildet ist, dass zwischen den Montagebereichen (42, 44; 46, 48) der Hubwelle (36) und des Hubarms (32, 34) ein Flächenkontakt vorliegt, welcher bevorzugt über den gesamten Umfang der Wellenaufnahme (50) des Hubarms (32, 34) vorgesehen ist.

7. Verbindung nach einem der Ansprüche 1 bis 6, **dadurch gekennzeichnet, dass** die Querschnittsform des Hubarms (32, 34) derart ausgebildet ist, dass ein abgerundeter oder planarer Seitenbereich (52) der vieleckigen Querschnittsform im Wesentlichen parallel zur äußeren Oberfläche (58, 60) des Hubarms (32, 34) angeordnet ist.

8. Verbindung nach einem der Ansprüche 1 bis 7, **dadurch gekennzeichnet, dass** die Wellenaufnahme (50) des Hubarms (32, 34) eine schlitzförmige Aussparung (56) aufweist, welche sich in radialer Richtung von dem Inneren der Wellenaufnahme (50) nach außen erstreckt.

9. Verbindung nach Anspruch 8, **dadurch gekennzeichnet, dass** an der schlitzförmigen Aussparung (56) ein Klemmmittel befestigbar ist, mit welchem der Hubarm (32, 34) an der Hubwelle (36) im montierten Zustand geklemmt werden kann.

10. Verbindung nach Anspruch 9, **dadurch gekennzeichnet, dass** das Klemmmittel mindestens eine Schraube und eine Mutter aufweist, und dass die Schraube in zwei Bohrungen (66, 68) einführbar ist, welche miteinander fluchten und im Wesentlichen senkrecht zu dem Verlauf der schlitzförmigen Aussparung (56) angeordnet sind.

11. Verbindung nach einem der Ansprüche 8 bis 10, **dadurch gekennzeichnet, dass** die schlitzförmige Aussparung (56) derart positioniert und ausgebildet ist, dass hierdurch bei der Montage der Hubarm (32, 34) unter geringer Kraftaufwendung auf die Hubwelle (36) geschoben werden kann.

12. Verbindung nach einem der Ansprüche 1 bis 11, **dadurch gekennzeichnet, dass** die Hubwelle (36) zwei Montagebereiche (42, 44) aufweist, dass an jedem Montagebereich (42, 44) der Hubwelle (36) jeweils ein Hubarm (32, 34) montierbar ist und dass vorzugsweise die zwei Montagebereiche (42, 44) jeweils endseitig an der Hubwelle (36) angeordnet sind.

13. Verbindung nach einem der Ansprüche 1 bis 12, **dadurch gekennzeichnet, dass** ein Sicherungsmittel vorgesehen ist, mit welchem eine Bewegung des Hubarms (32, 34) in Längsrichtung der Hubwelle (36) in einem an der Hubwelle (36) montierten Zustand zumindest weitgehend verhinderbar ist.

14. Verbindung nach Anspruch 13, **dadurch gekennzeichnet, dass** die Hubwelle (36) an ihrem Endbereich eine Stirnbohrung aufweist, in welche eine Schraube befestigbar ist und dass mit der Schraube eine Sicherungsscheibe mit einem Außendurchmesser montierbar ist, welcher größer als der Innendurchmesser der Wellenaufnahme (50) des Hubarms (32, 34) ist.

15. Verbindung nach einem der Ansprüche 1 bis 14, **dadurch gekennzeichnet, dass** die Hubwelle (36) in einem an dem Nutzfahrzeug vorgesehenen Lager (37, 39) drehbar gelagert ist und/oder dass der Hubarm (32, 34) eine Anlenkstelle (43, 45) aufweist, an welcher eine mit einem Unterlenker (14, 16) des Dreipunkt-Geräteanbaus (10) verbundene Hubstrebe (38, 40) drehbar/schwenkbar befestigbar ist und/oder dass der Hubarm (32, 34) eine weitere Anlenkstelle (28, 30) aufweist, an welcher ein Hubzylinder (22, 24) drehbar/schwenkbar befestigbar ist.

16. Verbindung nach einem der Ansprüche 1 bis 15, **dadurch gekennzeichnet, dass** die Hubwelle (36) und/oder der Hubarm (32, 34) jeweils in seinem Montagebereich (42, 44, 46, 48) gehärtet ausgebildet ist.

17. Hubarm eines Dreipunkt-Geräteanbaus für ein landwirtschaftliches oder industrielles Nutzfahrzeug, vorzugsweise nach einem der Ansprüche 1 bis 16, wobei der Hubarm (32, 34) einen Montagebereich (46, 48) mit einer Wellenaufnahme (50) zur Montage an einem Montagebereich (42, 44) einer Hubwelle (36) aufweist, wobei die Wellenaufnahme (50) des Hubarms (32, 36) im montierten Zustand die Hubwelle (36) an dem Montagebereich (42, 44) der Hubwelle (36) umgreift, wobei der Montagebereich (46, 48) des Hubarms (32, 34) im Wesentlichen komplementär zum Montagebereich (42, 44) der Hubwelle (36) ausgebildet ist, **dadurch gekennzeichnet, dass** der Montagebereich (46, 48) des Hubarms (32, 34) einen polygonförmigen Querschnitt derart aufweist, dass der Hubarm (32, 34) mit der Hubwelle (36) eine Polygonverbindung bildet, wenn der Hubarm (32, 34) an der Hubwelle (36) montiert ist.

18. Hubwelle eines Dreipunkt-Geräteanbaus für ein landwirtschaftliches oder industrielles Nutzfahrzeug, vorzugsweise nach einem der Ansprüche 1 bis 16, wobei die Hubwelle (36) einen Montagebereich (42, 44) aufweist, an welchem ein Hubarm (32, 34) montierbar ist, wobei der Montagebereich (42, 44) der Hubwelle (36) im montierten Zustand von dem Hubarm (32, 34) umgriffen wird, wobei der Montagebereich (42, 44) der Hubwelle (36) im Wesentlichen komplementär zum Montagebereich (46, 48) des Hubarms (32, 34) ausgebildet ist, **dadurch gekennzeichnet, dass** der Montagebereich (42, 44) der Hubwelle (36) einen polygonförmigen Querschnitt derart aufweist, dass die Hubwelle (36) mit dem Hubarm (32, 34) eine Polygonverbindung bildet, wenn der Hubarm (32, 34) an der Hubwelle (36) montiert ist.
